# EUROPÄISCHE PATENTSCHRIFT

(11) **EP 4 627 230 B1**
(45) Veröffentlichungstag und Bekanntmachung des Hinweises auf die Patenterteilung: **09.09.2026**
(21) Anmeldenummer: 23813332.6
(22) Anmeldetag: 23.11.2023
(51) Int. Cl.: F16H 57/04

(54) **VORRICHTUNG FÜR EIN HYDRAULISCHES SYSTEM, HYDRAULISCHES SYSTEM, ANTRIEBSMODUL EINES KRAFTFAHRZEUGS**
DEVICE FOR A HYDRAULIC SYSTEM, HYDRAULIC SYSTEM, DRIVE MODULE OF A MOTOR VEHICLE
DISPOSITIF POUR UN SYSTÈME HYDRAULIQUE, SYSTÈME HYDRAULIQUE, MODULE D'ENTRAÎNEMENT D'UN VÉHICULE AUTOMOBILE

(30) Priorität: 29.11.2022 DE 102022131628
(43) Veröffentlichungstag der Anmeldung: 08.10.2025
(73) Patentinhaber: AUDI Aktiengesellschaft, 85057 Ingolstadt (DE); VOLKSWAGEN AKTIENGESELLSCHAFT, 38440 Wolfsburg (DE)
(72) Erfinder: HAAS, Patrick, 85049 Ingolstadt (DE); SCHULLER, Dietmar, 93336 Altmannstein (DE); CORELL, Christian, 36287 Oberjossa (DE); NEUPERT, Christoph, 37130 Gleichen (DE)
(74) Vertreter: Gleiss Große Schrell und Partner mbB
(86) Internationale Anmeldenummer: PCT/EP2023/082791
(87) Internationale Veröffentlichungsnummer: WO 2024/115255

(56) Entgegenhaltungen:
- CN-A- 110 285 211
- DE-A1- 10 030 838
- DE-A1- 19 813 982

## Beschreibung

Die Erfindung betrifft eine Vorrichtung für ein hydraulisches System sowie ein hydraulisches System mit einer derartigen Vorrichtung, insbesondere für ein Antriebsmodul eines Kraftfahrzeugs. Außerdem betrifft die Erfindung ein Antriebsmodul mit einem derartigen hydraulischen System.

Aus dem Stand der Technik sind hydraulische Systeme für Antriebsmodule von Kraftfahrzeugen bekannt, die über Hydraulikkreisläufe zum Kühlen und/oder Schmieren von Kupplungen und Antriebsmaschinen verfügen. Insbesondere sind Antriebsmodule für Hybridfahrzeuge bekannt, die eine Brennkraftmaschine und eine elektrische Maschine zum wahlweisen Antrieb des Kraftfahrzeugs aufweisen. Derartige Antriebsmodule weisen üblicherweise jeweils Kupplungen zum Trennen und Verbinden der elektrischen Maschine der Brennkraftmaschine mit einem Antriebsstrang des Kraftfahrzeugs auf. Zum Kühlen und Schmieren der Kupplungen und der elektrischen Maschine selbst wird Kühl- und Schmieröl benötigt, das in Kühlkreisläufen zirkuliert. Das Antriebsmodul weist dabei üblicherweise separate Kühlkreisläufe für die Kupplungen auf, wobei zumindest der der elektrischen Maschine zugeordneten Kupplung und der oder den der Brennkraftmaschine zugeordneten Kupplungen jeweils eine, üblicherweise elektromotorisch angetriebene Pumpe zum Einstellen eines Kühlmedienstroms zugeordnet ist. Die zumindest zwei Pumpen werden üblicherweise über ein Steuergerät angesteuert, wobei der Kühlmedienstrom insbesondere in Abhängigkeit von der Drehzahl der Pumpen eingestellt wird.

Die Druckschrift CN 110 285 211 A betrifft ein Schmiersystem für eine Kohlebergbaumaschine. Das Schmiersystem weist einen Öleinlasskanal und einen Ölrücklaufkanal auf, wobei der Öleinlasskanal einen Öltank, eine Hydraulikpumpe, ein Umkehrventil, ein Drosselventil und Ölleitungen aufweist, wobei der Öltank, die Hydraulikpumpe, das Umkehrventil und das Drosselventil über die Ölleitungen nacheinander verbunden sind, und wobei die Hydraulikpumpe, das Umkehrventil und das Drosselventil in dem Öltank angeordnet sind.

Aus dem Stand der Technik sind weiterhin die Druckschriften DE 198 13 982 A1 und DE 100 30 838 A1 bekannt.

Der Erfindung liegt die Aufgabe zugrunde, ein verbessertes hydraulisches System zu schaffen, das eine verringerte Komplexität aufweist.

Die der Erfindung zugrunde liegende Aufgabe wird durch eine Vorrichtung für ein hydraulisches System mit den Merkmalen des Anspruchs 1 gelöst. Es ist eine Vorrichtung vorgesehen, mit einer ersten Hydraulikleitung, die mit einer Hydraulikdruckquelle einerseits und mit zumindest einer zu kühlenden und/oder zu schmierenden Einrichtung andererseits verbindbar ist, wobei der ersten Hydraulikleitung ein Druckbegrenzungsventil zugeordnet ist, das einen Tankanschluss aufweist und die erste Hydraulikleitung mit dem Tankanschluss verbindet, wenn ein Hydraulikdruck in der ersten Hydraulikleitung einen vorgegebenen Grenzwert überschreitet, wobei stromabwärts von dem Druckbegrenzungsventil eine Blende in der ersten Hydraulikleitung angeordnet ist, und wobei stromabwärts von der Blende eine Drossel in der ersten Hydraulikleitung angeordnet oder ausgebildet ist. Durch die beanspruchte Kombination und Anordnung von Druckbegrenzungsventil, Blende und Drossel ist eine vorteilhafte Abhängigkeit des Volumenstroms eines durch die erste Hydraulikleitung fließenden Mediums zu der Einrichtung von einer Temperatur des Mediums erreicht, wie im Folgenden erläutert werden soll. So ergibt sich zunächst durch das Druckbegrenzungsventil der Vorteil, dass ein Volumenstrom eines durch die erste Hydraulikleitung fließenden flüssigen Mediums zu der Einrichtung bedarfsgerecht begrenzt ist. Ist der Volumenstrom zu groß, wird überschüssiges Medium dann vorzugsweise direkt in ein das Medium bereitstellendes Reservoir zurückgeführt. Die Ansaugsicherheit und Funktion des hydraulischen Systems bleibt erhalten, ohne dass beispielsweise die Menge des Mediums in dem hydraulischen System erhöht werden muss, weil das überschüssige Medium in das Reservoir zurückgeführt wird. Besonders bevorzugt weist das Druckbegrenzungsventil einen derart großen Durchströmungsquerschnitt auf, dass der Druck vor dem Druckbegrenzungsventil nicht oder zumindest nur gering durch den Druckabfall des durchfließenden Medienstroms und die Temperatur des Mediums beeinflusst wird. Durch die Blende ist weiter eine besonders vorteilhafte, bedarfsgerechte Versorgung der Einrichtung mit Medium sichergestellt. Der Durchfluss einer idealen Blende ist dabei nur durch den Druckabfall über der Blende bestimmt und nicht oder nur in sehr geringem Maße von der Temperatur des durchfließenden Mediums abhängig. Vorzugsweise ist die Blende als ein dünnwandiges Bauteil ausgebildet. Durch eine derartige reale Auslegung der Blende als möglichst dünnwandiges Bauteil entspricht deren reales Verhalten vorteilhaft dem Verhalten einer idealen Blende oder ist diesem zumindest angenähert. Aus der Kombination eines derartigen Druckbegrenzungsventils mit möglichst konstantem Öffnungsdruck vor einer derartigen Blende und einem temperaturabhängigen Rückstaudruck aus der Folgestrecke nach der Blende in Richtung der Drossel ergibt sich ein von der Temperatur abhängiger Differenzdruck an der Blende und damit ein temperaturabhängiger Medienstrom zu der Einrichtung, sodass eine temperaturabhängige Versorgung der Einrichtung erreicht ist. Gemeinsam mit der Drossel sind das Druckbegrenzungsventil und die Blende also dazu ausgebildet, einen Volumenstrom des Mediums zu der Einrichtung in Abhängigkeit von einer Temperatur des Kühlmediums einzustellen, sodass eine temperaturabhängige Versorgung der Einrichtung mit Medium erreicht wird, ohne dass dazu komplexe Regelungen oder Steuerungen notwendig wären. Insbesondere ist vorgesehen, dass bei der bedarfsgerechten Versorgung der Einrichtung mit Medium bei kalten Temperaturen wenig Medium und bei hohen Temperaturen mehr Medium zugeführt wird. Besonders bevorzugt ist die Drossel dabei durch die Strömungswiderstände der Nachfolgestrecke zu der Einrichtung als ein temperatur- und durchflussabhängiger hydraulischer Widerstand ausgebildet. Insbesondere ist die Drossel durch zu der Einrichtung führende Hydraulikleitungen ausgebildet, die wie eine Drossel wirken. Die temperaturabhängige Versorgung der Einrichtung funktioniert beispielsweise wie folgt: der Volumenstrom durch die ideale Blende ist unabhängig von der Viskosität des Mediums und wird lediglich durch die Geometrie der Blende, insbesondere deren Durchmesser, bestimmt. Ist die reale Blende, wie vorstehend beschrieben, möglichst dünnwandig ausgebildet, entspricht ihr Verhalten dem der idealen Blende zumindest weitgehend. Hingegen ist der Volumenstrom durch die Drossel nicht nur abhängig von der Geometrie der Drosselstrecke, sondern auch stark abhängig von der Viskosität des Mediums bei gleichem Druck vor der Drossel. Je kälter das Medium, desto höher die Viskosität und desto geringer der Volumenstrom durch die Drossel. Bei niedrigen Temperaturen fließt der Einrichtung also weniger Medium zu als bei hohen Temperaturen. Daneben ist der Volumenstrom lediglich von einem Auslösedruck des Druckbegrenzungsventils abhängig. Je höher dieser ist, desto höher ist auch der jeweilige maximale Volumenstrom. Der vorteilhafte Effekt, also ein temperatur- und damit viskositätsabhängiger Medienstrom ergibt sich durch die Anordnung der drei Bauteile automatisch. Die Geometrie von Blende und Drossel sowie der Auslösedruck des Druckbegrenzungsventils sind bevorzugt derart aufeinander abgestimmt, dass der Einrichtung ein vorgegebener, temperaturabhängiger Medienstrom zugeführt wird. Der Blendendurchmesser ist insbesondere derart gewählt, dass bei heißem Medium, beispielsweise 100 °C, ein zum Kühlen ausreichend hoher Volumenstrom zugeführt wird. Die Drosselstrecke lässt gleichzeitig bei kaltem Medium, beispielsweise -30 °C, nur einen kleinen Volumenstrom zu, der gerade noch eine Schmierung erlaubt. Der Auslösedruck des Druckbegrenzungsventils ist bevorzugt so klein wie möglich gewählt oder derart minimiert, dass das Druckbegrenzungsventil gerade noch robust funktioniert, um beispielsweise den Energiebedarf einer Medienquelle möglichst niedrig zu halten. Für die entsprechende Abstimmung und Optimierung von Drosselstrecke, Blende und Auslösedruck werden insbesondere entsprechende Simulationen und Modellrechnungen durchgeführt.

Gemäß einer bevorzugten Weiterbildung der Erfindung ist vorgesehen, dass die Vorrichtung die zumindest eine zu kühlende und/ oder zu schmierende Einrichtung aufweist, und die Einrichtung oder zumindest eine der Einrichtungen eine Kupplung und/oder eine Antriebsmaschine für ein Kraftfahrzeug ist. Bei derartigen Einrichtungen sind die durch die erfindungsgemäße Vorrichtung erreichten Vorteile besonders stark ausgeprägt.

Besonders bevorzugt ist vorgesehen, dass das Druckbegrenzungsventil als Sitzventil ausgebildet ist. Durch die Ausbildung des Druckbegrenzungsventils als Sitzventil ist eine besonders vorteilhafte und robuste Möglichkeit zum Begrenzen des Medienstroms geschaffen. Sitzventile stören den Durchfluss darüber hinaus im unbetätigten Zustand praktisch nicht. Bei Sitzventilen wird das Ventil bekanntermaßen durch Verlagern eines Dichtelements entgegen eine Federkraft eines Federelements geöffnet. Der Öffnungsdruck wird also durch die Federkraft bestimmt. Darüber hinaus sind derartige Sitzventile insbesondere auch robuster gegen Schmutzpartikel, weil sie über deutlich größere Spalte zur Lagerung des Dichtkörpers verfügen, sodass die Anordnung aus einem derartigen Druckbegrenzungsventil und der Blende nahe eines Reservoirs anordenbar ist, in dem sich Schmutzpartikel ansammeln können. Vorzugsweise weist die Anordnung Kunststoff als Material auf. Insbesondere ist sie bis auf die Feder und Dichtungen vollständig aus Kunststoff gefertigt und damit vorteilhaft beispielsweise hinsichtlich Gewicht, Korrosion, Herstellbarkeit und Herstellkosten ausgeführt.

Gemäß einer bevorzugten Weiterbildung der Erfindung ist vorgesehen, dass das Druckbegrenzungsventil und die Blende als ein gemeinsames Modul ausgebildet sind. Durch die Ausbildung als gemeinsames Modul ist eine besonders vorteilhafte Möglichkeit zum einfachen Austausch einer herkömmlichen, wie eingangs beschriebenen, Pumpenanordnung geschaffen. So ist beispielsweise eines der eingangs genannten hydraulischen Systeme besonders einfach umrüstbar. Das Modul ist vorzugsweise als bauliche Einheit ausgebildet, sodass es vorteilhaft leicht austauschbar ist.

Besonders bevorzugt ist vorgesehen, dass stromabwärts von der Blende ein rohrförmiges, insbesondere auch konusförmiges, Adapterelement als Teil der Drossel in der ersten Hydraulikleitung angeordnet ist. Durch das Adapterelement, insbesondere durch geeignete Wahl der geometrischen Ausbildung des Adapterelements ist eine vorteilhafte zusätzliche Beeinflussungsmöglichkeit der Drosselstrecke und damit der Eigenschaften der Drossel geschaffen. Die Drossel wird also vorteilhaft an den Kühl- und/oder Schmierbedarf der Einrichtung angepasst. Das Adapterelement ist insbesondere dazu ausgebildet, die Vorrichtung mit zu der Einrichtung führenden Hydraulikleitungen fluidtechnisch zu verbinden. Das Adapterelement weist dabei vorzugsweise ein der Blende zugeordnetes erstes offenes Ende mit einem ersten Querschnitt und ein den Hydraulikleitungen zugeordnetes zweites offenes Ende mit einem zweiten Querschnitt auf. Insbesondere ist der zweite Querschnitt kleiner als der erste Querschnitt. Das Adapterelement ist dann vorteilhaft konusförmig ausgebildet, weist also eine konische Grundform auf. Durch geeignete Wahl des zweiten Querschnitts ist eine vorteilhaft einfache Anpassung der Vorrichtung an Hydraulikleitungen mit entsprechenden Querschnitten gewährleistet.

Das hydraulische System mit den Merkmalen des Anspruchs 6 weist zumindest eine zu kühlende und/oder zu schmierende Einrichtung und einen Hydraulikkreislauf zum Kühlen und/oder Schmieren der Einrichtung auf, wobei der Hydraulikkreislauf zumindest eine Hydraulikdruckquelle, insbesondere Pumpe, zum Fördern eines flüssigen Mediums aufweist. Das hydraulische System zeichnet sich durch eine erfindungsgemäße Vorrichtung aus, die die erste Hydraulikleitung aufweist, und die mit der Hydraulikdruckquelle einerseits und mit der zumindest einen Einrichtung andererseits verbunden ist. Auch daraus ergeben sich die bereits genannten Vorteile.

Das hydraulische System weist dabei besonders bevorzugt eine erste Kupplung, eine zweite Kupplung, und eine dritte Kupplung als zu kühlende und/oder zu schmierende Einrichtungen auf, wobei die erste und die zweite Kupplung einer ersten Antriebsmaschine, insbesondere Brennkraftmaschine, und die dritte Kupplung einer zweiten Antriebsmaschine, insbesondere elektrischen Maschine, zugeordnet sind, um diese wahlweise mit einem Getriebe des Kraftfahrzeugs zu koppeln, wobei der Hydraulikkreislauf zum Kühlen und/oder Schmieren zumindest der Kupplungen und der zweiten Antriebsmaschine ausgebildet ist, und wobei der Hydraulikkreislauf zumindest ein zwischen den Kupplungen und der Hydraulikdruckquelle, insbesondere Pumpe, zwischengeschaltetes und ansteuerbares Ventil zum Einstellen eines Medienstroms zumindest für die Kupplungen und die zweite Antriebsmaschine aufweist. Das Ventil ist also dazu ausgebildet, zumindest die zu durchströmenden Kupplungen und die Antriebsmaschine auszuwählen. Dadurch wird eine zusätzliche Pumpe für die dritte Kupplung eingespart, sodass die Komplexität des hydraulischen Systems im Vergleich zu den eingangs genannten Systemen, die zumindest zwei getrennte Pumpen für die Kupplungen aufweisen, vorteilhaft verringert ist. Die Funktion der der dritten Kupplung zugeordneten Pumpe wird also von einer gemeinsamen Pumpe für alle drei Kupplungen mit übernommen. Dazu wird insbesondere durch das Ventil eine zusätzliche hydraulische Schnittstelle geschaffen, um das Medium zu der dritten Kupplung sowie optional auch der elektrischen Maschine zuzuführen. Das Medium wird anschließend bevorzugt in ein das Medium bereitstellendes Reservoir oder einen Tank zurückgeführt. Vorzugsweise ist das Reservoir im Vergleich zu einem Reservoir aus den eingangs genannten hydraulischen Systemen derart ausgeführt, dass das Verdrängungsvolumen der nun entfallenen Pumpe kompensiert wird, beispielsweise durch einen zusätzlichen Verdrängungskörper. Insbesondere ist das Ventil dazu ausgebildet, der ersten und der zweiten Kupplung priorisiert Medium zuzuführen, und der dritten Kupplung erst dann Medium zuzuführen, wenn für die erste und die zweite Kupplung kein Medienstrom erforderlich ist. Vorzugsweise ist die Pumpe mit einem insbesondere drehzahlgeregelten Elektromotor wirkverbunden. Dadurch ist die Leistung der Pumpe und damit der Medienstrom vorteilhaft einstellbar.

Besonders bevorzugt sind zumindest eine zweite Hydraulikleitung und eine dritte Hydraulikleitung vorgesehen, die jeweils mit einer der Einrichtungen verbunden sind. Dadurch ist eine besonders vorteilhafte Möglichkeit zum bedarfsgerechten Versorgen der entsprechenden Einrichtungen mit Medium geschaffen.

Gemäß einer bevorzugten Weiterbildung der Erfindung ist vorgesehen, dass das Ventil derart ausgebildet ist, dass das Medium in einer ersten Schaltstellung des Ventils die zweite Hydraulikleitung zu der ersten Kupplung, insbesondere nur zu der ersten Kupplung, durchströmt, dass das Medium in einer zweiten Schaltstellung des Ventils die erste Hydraulikleitung zunächst zu der dritten Kupplung und anschließend zu der zweiten Antriebsmaschine, insbesondere nur zunächst zu der dritten Kupplung und anschließend zu der zweiten Antriebsmaschine, durchströmt, und dass das Medium in einer dritten Schaltstellung des Ventils die dritte Hydraulikleitung zu der zweiten Kupplung, insbesondere nur zu der zweiten Kupplung, durchströmt. Durch das wahlweise Durchströmen der jeweiligen Kupplung in der jeweiligen Schaltstellung ergibt sich der Vorteil, dass die jeweilige Kupplung bedarfsgerecht mit Medium versorgt wird. Es wird also jeweils ein separater Medienstrom für die jeweilige Kupplung zur Verfügung gestellt.

Besonders bevorzugt ist vorgesehen, dass das Ventil ein, insbesondere elektrisch betätigbares, 5/3-Wegeventil mit zwei Eingängen und drei Ausgängen ist, dass jeweils einer der Ausgänge genau einer der Kupplungen zugeordnet ist, und dass die beiden Eingänge der zumindest einen Hydraulikdruckquelle, insbesondere Pumpe, zugeordnet sind. Dadurch ist eine besonders vorteilhafte Möglichkeit zum Steuern der Kühlmedienströme zu den jeweiligen Kupplungen geschaffen. Vorzugsweise ist das Ventil ein Schieberventil oder ein Drehschieberventil. Besonders bevorzugt ist das Ventil elektromotorisch und/oder elektromagnetisch ansteuerbar. Dazu ist dem Ventil insbesondere ein elektromotorischer und/oder elektromagnetischer Aktor zugeordnet. So ist das Ventil vorteilhaft schnell in eine gewünschte Schaltstellung schaltbar.

Alternativ ist vorgesehen, dass das Ventil ein, insbesondere elektrisch betätigbares, 4/3-Wegeventil mit einem Eingang und drei Ausgängen ist, dass jeweils einer der Ausgänge genau einer der Kupplungen zugeordnet ist, und dass der Eingang der zumindest einen Hydraulikdruckquelle, insbesondere Pumpe, zugeordnet ist. Dadurch ist eine besonders vorteilhafte Möglichkeit zum Steuern der Kühlmedienströme zu den jeweiligen Kupplungen geschaffen. Vorzugsweise ist das Ventil ein Schieberventil oder ein Drehschieberventil. Besonders bevorzugt ist das Ventil elektromotorisch und/oder elektromagnetisch ansteuerbar. Dazu ist dem Ventil insbesondere ein elektromotorischer und/oder elektromagnetischer Aktor zugeordnet. So ist das Ventil vorteilhaft schnell in eine gewünschte Schaltstellung schaltbar.

Das Antriebsmodul mit den Merkmalen des Anspruchs 12 weist eine erste Antriebsmaschine, insbesondere Brennkraftmaschine, eine zweite Antriebsmaschine, insbesondere elektrische Maschine, und ein mit den Antriebsmaschinen koppelbares oder gekoppeltes Getriebe auf. Es zeichnet sich durch das erfindungsgemäße hydraulische System aus. Auch daraus ergeben sich die bereits genannten Vorteile.

Weitere Vorteile ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: einen Schaltplan eines erfindungsgemäßen hydraulischen Systems, und
- Figur 2: eine Detailansicht des hydraulischen Systems.

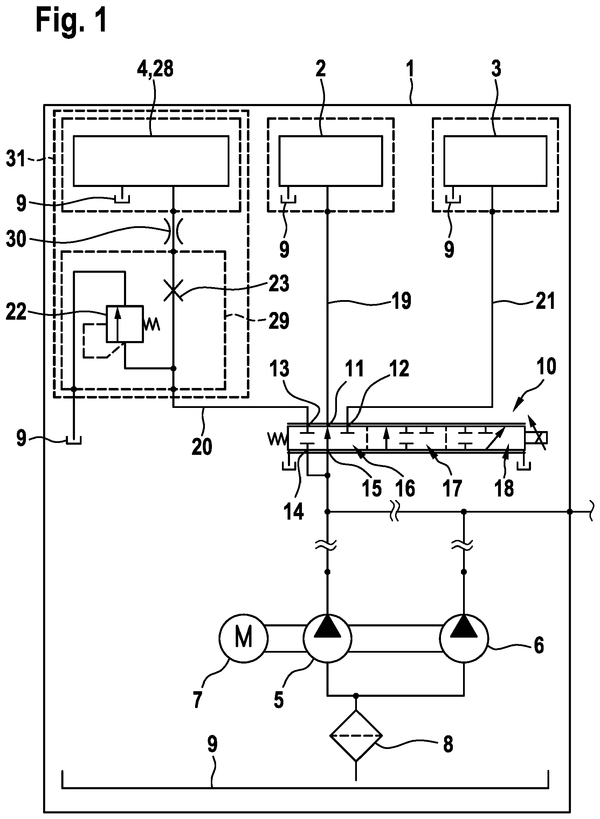

Die Figur 1 zeigt einen Schaltplan eines vorteilhaften hydraulischen Systems 1, das zum Einsatz in einem Antriebsmodul eines Kraftfahrzeugs ausgebildet ist. Das hydraulische System 1 weist eine erste Kupplung 2, eine zweite Kupplung 3 und eine dritte Kupplung 4 auf.

Die erste Kupplung 2 und die zweite Kupplung 3 sind einer nicht dargestellten ersten Antriebsmaschine, insbesondere Brennkraftmaschine, und die dritte Kupplung 4 einer zweiten Antriebsmaschine 28, insbesondere elektrischen Maschine, zugeordnet, um diese wahlweise mit einem Getriebe des Kraftfahrzeugs zu koppeln.

Das hydraulische System 1 weist außerdem einen gemeinsamen Hydraulikkreislauf zum Kühlen und/oder Schmieren zumindest der Kupplungen 2, 3, 4 und der zweiten Antriebsmaschine 28 auf. Der Hydraulikkreislauf weist dabei eine Pumpe 5 zum Fördern eines flüssigen Mediums auf. Außerdem ist eine weitere Pumpe 6 vorgesehen, die jedoch optional ist, und vorliegend dafür vorgesehen ist, weitere, nicht dargestellte Komponenten des Kraftfahrzeugs mit Medium zu versorgen.

Die beiden Pumpen 5, 6 sind auf einer gemeinsamen Welle angeordnet, die von einem Elektromotor 7 angetrieben wird. Der Elektromotor 7 ist bevorzugt drehzahlgeregelt, sodass die Förderleistung der Pumpen 5, 6 und der jeweilige Kühlmedienstrom von der Drehzahl des Elektromotors 7 abhängig ist.

Die beiden Pumpen 5, 6 sind unter Zwischenschaltung eines Saugfilters 8 mit einem Tank oder Reservoir 9 verbunden, das als Vorratsbehälter oder Sumpf für das Medium dient, und in dem das Medium vorzugsweise drucklos gespeichert ist.

Weiter weist der Hydraulikkreislauf ein zwischen den Kupplung 2, 3, 4 und der Pumpe 5 zwischengeschaltetes und ansteuerbares Ventil 10 zum Einstellen eines Kühlmedienstroms zumindest für die Kupplungen 2, 3, 4 und die zweite Antriebsmaschine auf.

Das Ventil 10 ist vorliegend als elektrisch betätigbares 5/3-Wegeventil mit drei Ausgängen 11, 12, 13 und zwei Eingängen 14, 15 ausgebildet. Dabei ist ein erster Ausgang 11 der ersten Kupplung 2, ein zweiter Ausgang 12 der zweiten Kupplung 3, und ein dritter Ausgang 13 der dritten Kupplung 4 zugeordnet. Ein erster Eingang 14 und ein zweiter Eingang 15 sind beide der Pumpe 5 zugeordnet. Gemäß einem nicht dargestellten Ausführungsbeispiel ist nur ein Eingang vorgesehen, der der Pumpe 5 zugeordnet ist. Das Ventil 10 ist dann als 4/3-Wegeventil ausgebildet.

Das Ventil 10 weist also drei mögliche Schaltstellungen 16, 17, 18 auf. In einer ersten Schaltstellung 16 des Ventils 10 durchströmt das Medium von dem zweiten Eingang 15 zu dem ersten Ausgang 11 eine zweite Hydraulikleitung 19 nur zu der ersten Kupplung 2.

In einer zweiten Schaltstellung 17 des Ventils 10 durchströmt das Medium von dem ersten Eingang 14 zu dem dritten Ausgang 13 eine erste Hydraulikleitung 20 nur zunächst zu der dritten Kupplung 4 und anschließend zu der zweiten Antriebsmaschine 28. Es ist also vorgesehen, dass das Medium sowohl die dritte Kupplung 4 als auch die zweite Antriebsmaschine 28 durchströmt.

Dazu sind beispielsweise Leitbleche und Querschnittsveränderungen zum Aufteilen und Führen des Kühlmedienstroms vorgesehen. So wird insbesondere zunächst die dritte Kupplung 4 mit einem Teil des Kühlmedienstroms bereichsweise durchströmt, und anschließend die zweite Antriebsmaschine 28.

Ein Teil des Kühlmedienstroms wird insbesondere abgezweigt und nur der zweiten Antriebsmaschine 28 zugeführt, sodass der dritten Kupplung 4 und der zweiten Antriebsmaschine 28 Medium bedarfsweise zugeführt wird.

In einer dritten Schaltstellung 18 des Ventils 10 durchströmt das Medium von dem zweiten Eingang 15 zu dem zweiten Ausgang 12 eine dritte Hydraulikleitung 21 nur zu der zweiten Kupplung 3.

Nachdem das Medium jeweils die Kupplungen 2, 3, 4 sowie die zweite Antriebsmaschine 28 durchströmt hat, wird es zurück in das Reservoir 9 geführt, wie in der Figur 1 angedeutet.

In der ersten Hydraulikleitung 20 sind stromabwärts, also in Richtung der dritten Kupplung 4 und der zweiten Antriebsmaschine 28 zunächst ein Druckbegrenzungsventil 22 und anschließend eine Blende 23 als ein Modul 29 angeordnet. Schließlich ist weiter stromabwärts eine durch zu der Kupplung 4 und der zweiten Antriebsmaschine 28 führende Hydraulikleitungen gebildete Drossel 30 angeordnet.

Das Druckbegrenzungsventil 22, die Blende 23 und die Drossel 30 sind Bestandteile einer vorteilhaften Vorrichtung 31 des hydraulischen Systems 1 und als solche dazu ausgebildet, den Volumenstrom des Mediums zu der dritten Kupplung 4 in Abhängigkeit von einer Temperatur des Mediums einzustellen, wie eingangs beschrieben. Das Druckbegrenzungsventil 22 führt überschüssiges Medium wiederum in das Reservoir 9 ab und ist vorliegend als Sitzventil ausgebildet.

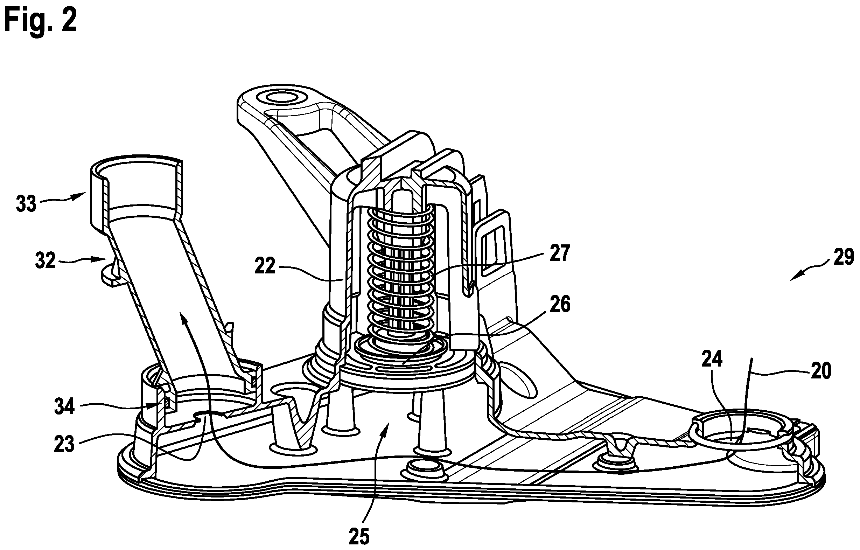

Die Figur 2 zeigt eine Detailansicht des Moduls 29 in dem zweiten Strömungspfad 20, dessen Strömungsrichtung durch einen Pfeil angedeutet ist. Das Medium strömt durch eine Einlassöffnung 24 in einen Bereich 25 hinein. Oberhalb des Bereichs 25 sitzt das als Sitzventil ausgebildete Druckbegrenzungsventil 22.

Ein Ventilteller 26 des Druckbegrenzungsventils 22 schließt den Bereich 25 dichtend ab, solange die Kraft, die aus dem durch das Medium auf den Ventilteller 26 ausgeübten Druck resultiert, kleiner ist als die durch die Federkraft eines Federelements 27, das auf der dem Bereich 25 abgewandten Seite des Ventiltellers 26 angeordnet ist, auf den Ventilteller ausgeübte Kraft.

Ist der durch das Medium ausgeübte Druck größer als der durch das Federelement 27 entsprechend der Federkraft ausgeübte Druck, wird der Ventilteller verlagert, sodass überschüssiges Medium durch die so entstandene Öffnung in das Druckbegrenzungsventil 22 strömt, das strömungstechnisch wiederum an das Reservoir 9 angeschlossen ist, wie vorstehend beschrieben, sodass das Medium zurück in der Reservoir 9 strömt.

Weiter entlang des zweiten Strömungspfads 20 ist die Blende 23 erkennbar. Diese weist vorliegend einen konstanten Strömungsquerschnitt auf und dient als Auslassöffnung für das Medium aus dem Bereich 25.

Stromabwärts der Blende 23 ist dabei vorliegend ein rohrförmiges Adapterelement 32 als Teil der Drossel 30 in der ersten Hydraulikleitung 20 angeordnet, wobei das Adapterelement 32 die Vorrichtung 31 mit den zu der Kupplung 4 und der zweiten Antriebsmaschine 28 führenden Hydraulikleitungen fluidtechnisch verbindet.

Das Adapterelement 32 weist dabei ein der Blende 23 zugeordnetes erstes offenes Ende 33 mit einem ersten Querschnitt und ein den Hydraulikleitungen zugeordnetes zweites offenes Ende 34 mit einem zweiten Querschnitt auf. Vorliegend ist der zweite Querschnitt kleiner als der erste Querschnitt. Das Adapterelement 32 weist vorliegend entlang seiner Längserstreckung, also entlang der Strömungsrichtung, einen sich kontinuierlich verkleinernden Querschnitt auf, ist also konusförmig ausgebildet.

Durch geeignete Wahl des zweiten Querschnitts und der geometrischen Ausbildung des Adapterelements 32 ist zum einen eine vorteilhaft einfache Anpassung des Vorrichtung 31 an Hydraulikleitungen mit entsprechenden Querschnitten gewährleistet und zum anderen eine vorteilhafte zusätzliche Beeinflussungsmöglichkeit einer Drosselstrecke und damit der Eigenschaften der Drossel 30 geschaffen. Die Drossel 30 ist also vorteilhaft an den Kühlund/oder Schmierbedarf der Kupplung 4 und der zweiten Antriebsmaschine 28 anpassbar.

### BEZUGSZEICHENLISTE:

- 1: hydraulisches System
- 2: erste Kupplung
- 3: zweite Kupplung
- 4: dritte Kupplung
- 5: Pumpe
- 6: weitere Pumpe
- 7: Elektromotor
- 8: Saugfilter
- 9: Reservoir
- 10: Ventil
- 11: erster Ausgang
- 12: zweiter Ausgang
- 13: dritter Ausgang
- 14: erster Eingang
- 15: zweiter Eingang
- 16: erste Schaltstellung
- 17: zweite Schaltstellung
- 18: dritte Schaltstellung
- 19: zweite Hydraulikleitung
- 20: erste Hydraulikleitung
- 21: dritte Hydraulikleitung
- 22: Druckbegrenzungsventil
- 23: Blende
- 24: Einlassöffnung
- 25: Bereich
- 26: Ventilteller
- 27: Federelement
- 28: zweite Antriebsmaschine
- 29: Modul
- 30: Drossel
- 31: Vorrichtung
- 32: Adapterelement
- 33: erstes Ende
- 34: zweites Ende

## Patentansprüche

1. Vorrichtung (31) für ein hydraulisches System (1), insbesondere eines Kraftfahrzeugs, mit einer ersten Hydraulikleitung (20) zum Verbinden einer Hydraulikdruckquelle mit zumindest einer zu kühlenden und/oder zu schmierenden Einrichtung, wobei der ersten Hydraulikleitung (20) ein Druckbegrenzungsventil (22) zugeordnet ist, das einen Tankanschluss aufweist und die erste Hydraulikleitung (20) mit dem Tankanschluss verbindet, wenn ein Hydraulikdruck in der ersten Hydraulikleitung (20) einen vorgegebenen Grenzwert überschreitet, wobei stromabwärts von dem Druckbegrenzungsventil (22) eine Drossel (30) in der ersten Hydraulikleitung (20) angeordnet oder ausgebildet ist, **dadurch gekennzeichnet, dass** stromabwärts von dem Druckbegrenzungsventil (22) und stromaufwärts von der Drossel (30) eine Blende (23) in der ersten Hydraulikleitung (20) angeordnet ist.

2. Vorrichtung nach Anspruch 1, **dadurch gekennzeichnet, dass** die Vorrichtung die zumindest eine zu kühlende und/oder zu schmierende Einrichtung aufweist, und die Einrichtung oder zumindest eine der Einrichtungen eine Kupplung (2,3,4) und/oder eine Antriebsmaschine (28) für ein Kraftfahrzeug ist.

3. Vorrichtung nach einem der vorhergehenden Ansprüche, **dadurch gekennzeichnet, dass** das Druckbegrenzungsventil (22) als Sitzventil ausgebildet ist.

4. Vorrichtung nach einem der vorhergehenden Ansprüche, **dadurch gekennzeichnet, dass** das Druckbegrenzungsventil (22) und die Blende (23) als ein gemeinsames Modul (29) ausgebildet sind.

5. Vorrichtung nach einem der vorhergehenden Ansprüche, **dadurch gekennzeichnet, dass** stromabwärts von der Blende (23) ein rohrförmiges, insbesondere auch konusförmiges, Adapterelement (32) als Teil der Drossel (30) in der ersten Hydraulikleitung (20) angeordnet ist.

6. Hydraulisches System (1), mit zumindest einer zu kühlenden und/oder zu schmierenden Einrichtung, und mit einem Hydraulikkreislauf zum Kühlen und/oder Schmieren der Einrichtung, wobei der Hydraulikkreislauf zumindest eine Hydraulikdruckquelle, insbesondere Pumpe (5), zum Fördern eines flüssigen Mediums aufweist, **gekennzeichnet durch** eine Vorrichtung (31) nach einem der Ansprüche 1 bis 5, die die erste Hydraulikleitung (20) aufweist, und die mit der Hydraulikdruckquelle einerseits und mit der zumindest einen Einrichtung andererseits verbunden ist.

7. Hydraulisches System (1) nach Anspruch 6, für ein Antriebsmodul eines Kraftfahrzeugs, **dadurch gekennzeichnet, dass** das hydraulische System (1) zumindest eine erste Kupplung (2), eine zweite Kupplung (3), und eine dritte Kupplung (4) als zu kühlende und/oder zu schmierende Einrichtungen aufweist, dass die erste Kupplung (2) und die zweite Kupplung (3) einer ersten Antriebsmaschine, insbesondere Brennkraftmaschine, und die dritte Kupplung (4) einer zweiten Antriebsmaschine (28), insbesondere elektrischen Maschine, zugeordnet sind, um diese wahlweise mit einem Getriebe des Kraftfahrzeugs zu koppeln, dass der Hydraulikkreislauf zum Kühlen und/oder Schmieren zumindest der Kupplungen (2,3,4) und der zweiten Antriebsmaschine (28) ausgebildet ist, und dass der Hydraulikkreislauf zumindest ein zwischen den Kupplungen (2,3,4) und der Hydraulikdruckquelle, insbesondere Pumpe (5), zwischengeschaltetes und ansteuerbares Ventil (10) zum Einstellen eines Medienstroms zumindest für die Kupplungen (2,3,4) und die zweite Antriebsmaschine (28) aufweist.

8. Hydraulisches System nach Anspruch 7, **gekennzeichnet durch** zumindest eine zweite Hydraulikleitung (19) und eine dritte Hydraulikleitung (21), die jeweils mit einer der Einrichtungen verbunden sind.

9. Hydraulisches System nach Anspruch 8, **dadurch gekennzeichnet, dass** das Ventil (10) derart ausgebildet ist, dass das Medium in einer ersten Schaltstellung (16) des Ventils (10) die zweite Hydraulikleitung (19) zu der ersten Kupplung (2), insbesondere nur zu der ersten Kupplung (2), durchströmt, dass das Medium in einer zweiten Schaltstellung (17) des Ventils (10) die erste Hydraulikleitung (20) zunächst zu der dritten Kupplung (4) und anschließend zu der zweiten Antriebsmaschine (28), insbesondere nur zunächst zu der dritten Kupplung (4) und anschließend zu der zweiten Antriebsmaschine (28), durchströmt, und dass das Medium in einer dritten Schaltstellung (18) des Ventils (10) die dritte Hydraulikleitung (21) zu der zweiten Kupplung (3), insbesondere nur zu der zweiten Kupplung (3), durchströmt.

10. Hydraulisches System nach einem der Ansprüche 8 und 9, **dadurch gekennzeichnet, dass** das Ventil (10) ein, insbesondere elektrisch betätigbares, 5/3-Wegeventil mit zwei Eingängen (14,15) und drei Ausgängen (11,12,13) ist, dass jeweils einer der Ausgänge (11,12, 13) genau einer der Kupplungen (2,3,4) zugeordnet ist, und dass die beiden Eingänge (14,15) der zumindest einen Hydraulikdruckquelle, insbesondere Pumpe (5), zugeordnet sind.

11. Hydraulisches System nach einem der Ansprüche 8 und 9, **dadurch gekennzeichnet, dass** das Ventil (10) ein, insbesondere elektrisch betätigbares, 4/3-Wegeventil mit einem Eingang (14) und drei Ausgängen (11,12,13) ist, dass jeweils einer der Ausgänge (11,12, 13) genau einer der Kupplungen (2,3,4) zugeordnet ist, und dass der Eingang (14) der zumindest einen Hydraulikdruckquelle, insbesondere Pumpe (5), zugeordnet ist.

12. Antriebsmodul für ein Kraftfahrzeug, mit einer ersten Antriebsmaschine, insbesondere Brennkraftmaschine, mit einer zweiten Antriebsmaschine (28), insbesondere elektrischen Maschine, und mit einem mit den Antriebsmaschinen koppelbaren oder gekoppelten Getriebe, **gekennzeichnet durch** ein hydraulisches System (1) nach einem der Ansprüche 6 bis 11.

## Claims

1. Device (31) for a hydraulic system (1), in particular of a motor vehicle, having a first hydraulic line (20) for connecting a hydraulic pressure source to at least one component to be cooled and/or lubricated, wherein a pressure relief valve (22) is associated with the first hydraulic line (20), which pressure relief valve has a reservoir connection and connects the first hydraulic line (20) to the reservoir connection when the hydraulic pressure in the first hydraulic line (20) exceeds a predetermined limit value, wherein a throttle (30) is arranged or formed in the first hydraulic line (20) downstream of the pressure relief valve (22), **characterised in that** an orifice (23) is arranged in the first hydraulic line (20) downstream of the pressure relief valve (22) and upstream of the throttle (30).

2. Device according to claim 1, **characterised in that** the device comprises the at least one component to be cooled and/or lubricated, and the component or at least one of the components is a clutch (2, 3, 4) and/or a drive engine (28) for a motor vehicle.

3. Device according to one of the preceding claims, **characterised in that** the pressure relief valve (22) is designed as a seat valve.

4. Device according to one of the preceding claims, **characterised in that** the pressure relief valve (22) and the orifice (23) are formed as a single module (29).

5. Device according to one of the preceding claims, **characterised in that** a tubular, and in particular also conical, adapter element (32) is arranged downstream of the orifice (23) as part of the throttle (30) in the first hydraulic line (20).

6. Hydraulic system (1) having at least one component to be cooled and/or lubricated, and a hydraulic circuit for cooling and/or lubricating the component, wherein the hydraulic circuit comprises at least one hydraulic pressure source, in particular pump (5), for conveying a liquid fluid, **characterised by** a device (31) according to one of claims 1 to 5, which comprises the first hydraulic line (20) and which is connected to the hydraulic pressure source on the one hand and to the at least one component on the other.

7. Hydraulic system (1) according to claim 6, for a drive module of a motor vehicle, **characterised in that** the hydraulic system (1) comprises at least one first clutch (2), a second clutch (3), and a third clutch (4) as components to be cooled and/or lubricated, that the first clutch (2) and the second clutch (3) are associated with a first drive engine, in particular an internal combustion engine, and the third clutch (4) is associated with a second drive engine (28), in particular an electric machine, in order to selectively couple these to a gearbox of the motor vehicle, that the hydraulic circuit is configured for cooling and/or lubricating at least the clutches (2,3,4) and the second drive engine (28), and that the hydraulic circuit comprises at least one controllable valve (10), interposed between the clutches (2,3,4) and the hydraulic pressure source, in particular pump (5), for setting a flow of fluid at least to the clutches (2, 3, 4) and the second drive engine (28).

8. Hydraulic system according to claim 7, **characterised by** at least a second hydraulic line (19) and a third hydraulic line (21), each of which is connected to one of the components.

9. Hydraulic system according to claim 8, **characterised in that** the valve (10) is configured such that in a first switch position (16) of the valve (10) the fluid flows through the second hydraulic line (19) to the first clutch (2), in particular only to the first clutch (2), that in a second switch position (17) of the valve (10) the fluid flows through the first hydraulic line (20) to the third clutch (4) first and subsequently to the second drive engine (28), in particular only to the third clutch (4) first and subsequently to the second drive engine (28), and that in a third switch position (18) of the valve (10) the medium flows through the third hydraulic line (21) to the second clutch (3), in particular only to the second clutch (3).

10. Hydraulic system according to one of claims 8 and 9, **characterised in that** the valve (10) is a, in particular electrically actuated, 5/3-way valve, having two inlets (14, 15) and three outlets (11, 12, 13), that exactly one of the outlets (11, 12, 13) is associated with exactly one of the clutches (2, 3, 4), and that the two inlets (14, 15) are associated with the at least one hydraulic pressure source, in particular pump (5).

11. Hydraulic system according to one of claims 8 and 9, **characterised in that** the valve (10) is a, in particular electrically actuated, 4/3-way valve having an inlet (14) and three outlets (11, 12, 13), that each one of the outlets (11, 12, 13) is associated with exactly one of the clutches (2, 3, 4), and that the inlet (14) is associated with the at least one hydraulic pressure source, in particular pump (5).

12. Drive module for a motor vehicle, having a first drive engine, in particular an internal combustion engine, a second drive engine (28), in particular an electric machine, and a gearbox which can be or is coupled to the drive engines, **characterised by** a hydraulic system (1) according to one of claims 6 to 11.

## Revendications

1. Dispositif (31) pour un système hydraulique (1), en particulier d'un véhicule automobile, comprenant une première conduite hydraulique (20) permettant de relier une source de pression hydraulique à au moins un équipement à refroidir et/ou à lubrifier, dans lequel une soupape de limitation de pression (22), qui présente un raccord de réservoir et relie la première conduite hydraulique (20) au raccord de réservoir lorsqu'une pression hydraulique dans la première conduite hydraulique (20) dépasse une valeur limite prédéterminée, est associée à la première conduite hydraulique (20), dans lequel un étranglement (30) est agencé ou réalisé dans la première conduite hydraulique (20) en aval de la soupape de limitation de pression (22), **caractérisé en ce qu'**un diaphragme (23) est agencé dans la première conduite hydraulique (20) en aval de la soupape de limitation de pression (22) et en amont de l'étranglement (30).

2. Dispositif selon la revendication 1, **caractérisé en ce que** le dispositif présente le au moins un équipement à refroidir et/ou à lubrifier, et ledit équipement ou au moins un des équipements est un embrayage (2, 3, 4) et/ou un moteur d'entraînement (28) destiné à un véhicule automobile.

3. Dispositif selon l'une quelconque des revendications précédentes, **caractérisé en ce que** la soupape de limitation de pression (22) est réalisé sous la forme d'une soupape champignon.

4. Dispositif selon l'une quelconque des revendications précédentes, **caractérisé en ce que** la soupape de limitation de pression (22) et le diaphragme (23) sont réalisés sous la forme d'un module commun (29).

5. Dispositif selon l'une quelconque des revendications précédentes, **caractérisé en ce qu'**un élément adaptateur (32) tubulaire, en particulier également conique, faisant partie de l'étranglement (30) est agencé dans la première conduite hydraulique (20) en aval du diaphragme (23)

6. Système hydraulique (1), comprenant au moins un équipement à refroidir et/ou à lubrifier, et comprenant un circuit hydraulique permettant de refroidir et/ou de lubrifier l'équipement, dans lequel le circuit hydraulique présente au moins une source de pression hydraulique, en particulier une pompe (5), permettant de transporter un fluide, **caractérisé par** un dispositif (31) selon l'une quelconque des revendications 1 à 5, qui présente la première conduite hydraulique (20) et qui est relié à la source de pression hydraulique d'une part et à l'au moins un équipement d'autre part.

7. Système hydraulique (1) selon la revendication 6, pour un module d'entraînement d'un véhicule automobile, **caractérisé en ce que** le système hydraulique (1) présente au moins un premier embrayage (2), un deuxième embrayage (3) et un troisième embrayage (4) faisant office d'équipements à refroidir et/ou à lubrifier, **en ce que** le premier embrayage (2) et le deuxième embrayage (3) sont associés à un premier moteur d'entraînement, en particulier à un moteur à combustion interne, et le troisième embrayage (4) est associé à un second moteur d'entraînement (28), en particulier à un moteur électrique, afin de le coupler au choix à une transmission du véhicule automobile, **en ce que** le circuit hydraulique est conçu pour refroidir et/ou lubrifier au moins les embrayages (2, 3, 4) et le second moteur d'entraînement (28), et **en ce que** le circuit hydraulique présente au moins une soupape (10) interposée entre les embrayages (2, 3, 4) et la source de pression hydraulique, en particulier la pompe (5), et pouvant être commandée et permettant d'ajuster un débit de fluide au moins pour les embrayages (2, 3, 4) et le second moteur d'entraînement (28).

8. Système hydraulique selon la revendication 7, **caractérisé par** au moins une deuxième conduite hydraulique (19) et une troisième conduite hydraulique (21), qui sont respectivement reliées à un des équipements.

9. Système hydraulique selon la revendication 8, **caractérisé en ce que** la soupape (10) est conçue de telle manière que, dans une première position de commutation (16) de la soupape (10), le fluide traverse la deuxième conduite hydraulique (19) vers le premier embrayage (2), en particulier uniquement vers le premier embrayage (2), que, dans une deuxième position de commutation (17) de la soupape (10), le fluide traverse la première conduite hydraulique (20) d'abord vers le troisième embrayage (4) puis vers le second moteur d'entraînement (28), en particulier uniquement d'abord vers le troisième embrayage (4) puis vers le second moteur d'entraînement (28), et que, dans une troisième position de commutation (18) de la soupape (10), le fluide traverse la troisième conduite hydraulique (21) vers le deuxième embrayage (3), en particulier uniquement vers le deuxième embrayage (3).

10. Système hydraulique selon l'une quelconque des revendications 8 et 9, **caractérisé en ce que** la soupape (10) est une vanne à 5/3 voies, en particulier à commande électrique, comprenant deux entrées (14, 15) et trois sorties (11, 12, 13), **en ce que** respectivement une des sorties (11, 12, 13) est associée à exactement un des embrayages (2, 3, 4), et **en ce que** les deux entrées (14, 15) sont associées à l'au moins une source de pression hydraulique, en particulier à la pompe (5).

11. Système hydraulique selon l'une quelconque des revendications 8 et 9, **caractérisé en ce que** la soupape (10) est une vanne à 4/3 voies, en particulier à commande électrique, comprenant une entrée (14) et trois sorties (11, 12, 13), **en ce que** respectivement une des sorties (11, 12, 13) est associée à exactement un des embrayages (2, 3, 4), et **en ce que** l'entrée (14) est associée à l'au moins une source de pression hydraulique, en particulier à la pompe (5).

12. Module d'entraînement pour un véhicule automobile, comprenant un premier moteur d'entraînement, en particulier un moteur à combustion interne, un deuxième moteur d'entraînement (28), en particulier un moteur électrique, et une transmission couplée ou pouvant être couplée aux moteurs d'entraînement, **caractérisé par** un système hydraulique (1) selon l'une quelconque des revendications 6 à 11.
